# EUROPEAN PATENT APPLICATION

(11) **EP 4 442 178 A1**
(43) Date of publication of application: **09.10.2024**
(21) Application number: 22902710.7
(22) Date of filing: 29.04.2022
(51) Int. Cl.: A47J 43/046

(54) **MILK DISCHARGE VALVE DEVICE, PROCESSING BOWL ASSEMBLY, AND FOOD PROCESSOR**

(30) Priority: 09.12.2021 CN 202123091942 U
(71) Applicant: Guangdong Midea Consumer Electric Manufacturing Co., Ltd., Foshan, Guangdong 528311 (CN)
(72) Inventor: SUN, Yi, Foshan, Guangdong 528311 (CN); HUANG, Bing, Foshan, Guangdong 528311 (CN); TANG, Yan, Foshan, Guangdong 528311 (CN)
(74) Representative: Ran, Handong
(86) International application number: PCT/CN2022/090489
(87) International publication number: WO 2023/103270

(57) **Abstract**

A milk discharge valve device (1), a processing bowl assembly (4), and a food processor (9). The food processor (9) is provided with a discharge port (301). The milk discharge valve device (1) comprises: a valve seat (10) for mounting the milk discharge valve device (1) to the food processor (9); a discharge pipe assembly (20), comprising a discharge pipe (30) for butt joint with the discharge port (301), wherein the discharge pipe assembly (20) is movably connected to the valve seat (10) and can be pulled away from the valve seat (10); and a pressing mechanism (50) provided on the valve seat (10), wherein the pressing mechanism (50) acts on the exterior of the discharge pipe (30), such that the discharge pipe (30) switches between a natural connected state or a stressed closed state.

## Description

This application claims priority to Chinese patent application No. 202123091942.X filed on December 9, 2021, the entire contents of which are incorporated herein by reference.

### TECHNICAL FIELD

The present application relates to the technical field of household electrical appliances, and in particular to a slurry valve device, a processing cup assembly using the slurry valve device, and a food processor using the processing cup assembly.

### BACKGROUND

With the improvement of quality of life, food processors such as high-speed blenders and soybean milk makers are becoming increasingly popular in people's lives. These food processors can not only grind nuts into fine ingredients but also blend various fruit and vegetable juices, boil, brew tea, and perform multiple functions, bringing convenience to people's lives.

Food processors usually provide a slurry discharge function for ease of use. However, during long-term use, the slurry outlet pipe has been passing through the food liquid for a long time, and the accumulation of dirt in this position has become a new pain point for users.

### SUMMARY

### TECHNICAL PROBLEM

The main purpose of the present application is to provide a slurry valve device, aiming at facilitating the cleaning of the slurry valve device, and improving food safety.

### TECHNICAL SOLUTION

To achieve the above-mentioned purpose, the present application provides a slurry valve device, applied to a food processor provided with a discharge port, including: a valve seat configured to install the slurry valve device to the food processor; a discharge pipe assembly; and an extrusion mechanism provided on the valve seat.

In an embodiment, the discharge pipe assembly includes a discharge pipe for docking with the discharge port, the discharge pipe assembly is movably connected to the valve seat to be withdrawn from the valve seat, and the extrusion mechanism acts on an outside of the discharge pipe to make the discharge pipe switch between a conducted state and a closed state.

In an embodiment, the discharge pipe assembly includes an installation seat, the discharge pipe is installed on the installation seat, the valve seat is formed with an installation groove, and the installation seat is slidably inserted into the installation groove.

In an embodiment, a guide structure is formed between a groove wall of the installation groove and an outer wall of the installation seat.

In an embodiment, the guide structure includes a guide rail and a guide groove formed between a groove wall of the installation groove and an outer wall of the installation seat, and the guide rail is inserted into the guide groove.

In an embodiment, the discharge pipe is detachably connected to the installation seat.

In an embodiment, the installation groove is provided with an avoidance port formed on a bottom of the valve seat and an insertion port opened on a side part of the valve seat, the installation seat is inserted into the installation groove from the insertion port through a side of the valve seat, and a part of the discharge pipe is extended downward from the avoidance port.

In an embodiment, a position detection structure is further provided between the discharge pipe assembly and the valve seat.

In an embodiment, a lock structure is further provided between the valve seat and the installation seat.

In an embodiment, the lock structure includes a lock assembly installed on the installation seat and a buckle groove provided on the valve seat, and the lock assembly is separated from the buckle groove.

In an embodiment, the lock assembly includes a button, a latch, and a reset piece, the installation seat is provided with an open installation cavity, the latch is movably provided in the installation cavity, the latch is partially extending from the installation seat to be plugged into the buckle groove, a part of the latch located in the installation cavity is provided with a drive ramp, the button is partially extending into the installation cavity and is movably connected to the installation seat, a part of the button extending into the installation cavity is formed with a guide ramp that is in sliding contact with the drive ramp, and the reset piece is configured to provide elastic force to drive the latch partially to extend out of the installation seat.

The present application further provides a processing cup assembly, including a cup body, a processing actuator, and the above-mentioned slurry valve device.

In an embodiment, the cup body is opened with the discharge port, the processing actuator is extending into the cup body, and the slurry valve device is installed in the cup body and docking with the discharge port through the discharge pipe.

In an embodiment, an installation hole is opened on the valve seat, the cup body is provided with a connecting rod outside, and the valve seat is fixed to the cup body through a cooperation of a connecting piece, the installation hole and the connecting rod.

The present application further provides a food processor, including a machine and a processing cup assembly installed on the machine.

In an embodiment, the processing cup assembly is the above-mentioned processing cup assembly, a drive piece being provided on the machine, and the drive piece being in transmission connection with a processing actuator.

### TECHNICAL EFFECT

On one hand, in technical solutions of the present application, the discharge pipe assembly in the discharge valve device is movably connected to the valve seat, and the discharge pipe assembly can be withdrawn from the valve seat. During the long-term use of the food processor, when fluid food adheres to the flow channel of the discharge valve device, the discharge pipe assembly can be removed and cleaned separately, which is convenient for cleaning and does not easily cause the risk of mold and bacteria due to long-term retention of food, and thus the food safety performance is improved. On the other hand, the present application provides the extrusion mechanism to act on the outside of the discharge pipe to control the conducting and closing of the discharge pipe, and unlike the traditional valve structure, the valve core is extended into the discharge pipe to control the conducting and closing, and thus the situation where food residues are retained on the valve core is avoided. During the cleaning process, only the discharge pipe needs to be flushed, which is relatively convenient to clean and further improves the sanitation and safety of the food processor during use.

### BRIEF DESCRIPTION OF THE DRAWINGS

In order to more clearly illustrate the technical solutions in the embodiments of the present application or the prior art, the following briefly introduces the drawings required for use in the embodiments or the prior art description. Obviously, the drawings described below are only some embodiments of the present application. For those skilled in the art, other drawings can also be obtained based on the structures shown in these drawings without paying creative work.
FIG. 1 is a schematic cross-sectional view of a food processor according to an embodiment of the present application.
FIG. 2 is a schematic diagram of an exploded structure of a structure in FIG. 1.
FIG. 3 is a schematic diagram of a part of the structure in FIG. 1.
FIG. 4 is a schematic diagram of an exploded structure of the part of the structure in FIG. 1.
FIG. 5 is a schematic structural diagram of a slurry valve device in a food processor in FIG. 1.
FIG. 6 is a schematic diagram of an exploded structure of the slurry valve device in FIG. 5.
FIG. 7 is a schematic cross-sectional view of the slurry valve device in FIG. 5.
FIG. 8 is a schematic side view of the slurry valve device in FIG. 5.

### Description of reference signs:

| Reference sign | Name | Reference sign | Name |
|---|---|---|---|
| 9 | food processor | 30 | discharge pipe |
| 8 | machine | 40 | installation seat |
| 801 | control panel | 41 | guide rail |
| 7 | drive piece | 50 | extrusion mechanism |
| 6 | water tank | 51 | drive motor |
| 5 | water pump assembly | 52 | actuator |
| 4 | processing cup assembly | 60 | lock structure |
| 3 | cup body | 61 | lock assembly |
| 301 | discharge port | 62 | button |
| 2 | processing actuator | 621 | drive ramp |
| 1 | slurry valve device | 63 | latch |
| 10 | valve seat | 631 | guide ramp |
| 10a | first seat body | 64 | reset piece |
| 10b | second seat body | C | buckle groove |
| 11 | installation groove | 70 | position detection structure |
| 12 | guide groove | 71 | detection element |
| 13 | installation hole | 72 | sensing element |
| 20 | discharge pipe assembly | | |

The realization, functional features and advantages of the present application will be further described in conjunction with the embodiments and with reference to the accompanying drawings.

### DETAILED DESCRIPTION OF THE EMBODIMENTS

The technical solutions in the embodiments of the present disclosure will be clearly and completely described below with reference to the drawings in the embodiment of the present disclosure. Obviously, the described embodiments are only a part of the embodiments of the present disclosure, not all of the embodiments. Based on the embodiments in the present disclosure, all other embodiments perceived by those skilled in the art without creative effort should be fallen within the protection scope of the present disclosure.

It should be noted that all of the directional instructions in the embodiments of the present disclosure (such as, up, down, left, right, front, rear....) are only used to explain the relative position relationship and movement of each component under a specific attitude (as shown in the drawings), if the specific attitude changes, the directional instructions will change correspondingly.

Besides, the descriptions in the present disclosure that refer to "first," "second," etc. are only for descriptive purposes and are not to be interpreted as indicating or implying relative importance or to implicitly indicate the number of technical features indicated. Thus, a feature defined as "first" or "second" may explicitly or implicitly include at least one of the features. Additionally, the term "and/or" used throughout the specification encompasses three scenarios. Taking A and/or B as an example, it includes the technical solution of A, the technical solution of B, and the technical solution where both A and B are satisfied simultaneously. Furthermore, the technical solutions of the various embodiments can be combined with each other, but such combinations must be based on the ability of those skilled in the art to implement them. If the combination of technical solutions results in contradictions or is unfeasible, it should be considered that such a combination does not exist and is not within the scope of protection claimed by the present application.

The present application provides a food processor 9.

The food processor 9 can perform operations such as whipping, grinding, mixing, and boiling on the ingredients. In actual use, the food processor 9 can be, for example, a juicer or a juice extractor on the market, which can be used to squeeze fruits and vegetables to obtain fruit and vegetable juice. It can also be, for example, a high-speed blender or a soymilk machine. It can whip and grind the ingredients at high speed, and can further boil the crushed ingredients to make cooked food and drinks. That is, the food processor 9 provided in the present application may be provided with or without a heating function.

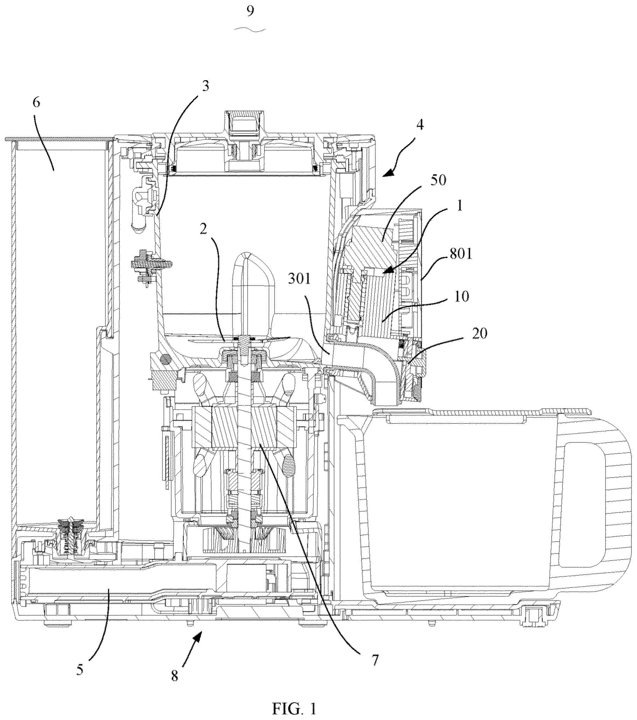

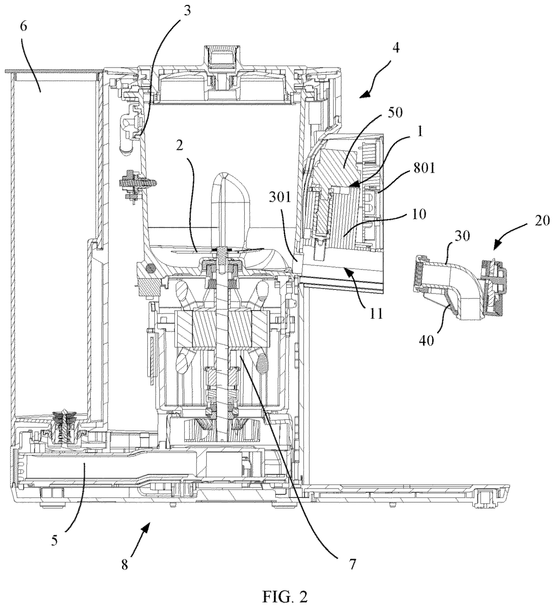

As shown in FIGS. 1 and 2, in the embodiment of the present application, the food processor 9 includes a machine 8, a processing cup assembly 4, and a water tank 6. In some scenarios, the food processor 9 is further provided with a slurry receiving cup. The machine 8 includes a housing and a drive piece 7 installed in the housing. The drive piece 7 is a rotation motor. The water tank 6 is installed in the housing. A water pump assembly 5 is further provided in the housing of the machine 8. In an embodiment, the water tank 6 can be detachably connected to the housing. The detachable connection between the water tank 6 and the housing can be, but not limited to, snap-on, plug-in, etc. In the technical solution shown in FIGS. 1 and 2, a placement table is formed on the housing of the food processor 9. The water tank 6 is placed on the placement table. At the same time, a hook and a groove structure are provided between the housing and the water tank 6. After the water tank 6 is placed on the placement table, the hook is inserted into the groove to relatively fix the water tank 6 and the machine 8. The water tank 6 is detachably connected to the housing, during the use process, the water tank 6 can be disassembled separately for cleaning and adding water, which is convenient to use. The water pump assembly 5 includes a water pump and a water inlet pipe and a water outlet pipe connected to the water pump. A joint is provided on the water pipe inlet. The joint is fixed on the placement table. At the same time, an interface is provided on the water tank 6. After the water tank 6 is placed on the placement table, the joint and the interface are connected and communicated. The processing cup assembly 4 includes a cup body 3, a processing actuator 2 and a slurry valve device 1. The end of the above-mentioned water outlet pipe is connected to a nozzle. The nozzle is used to spray the liquid required for food processing or automatic cleaning into the cup body 3. The processing cup assembly 4 can be removed by the machine 8, or the processing cup assembly 4 can be fixed on the machine 8. In an embodiment, the processing cup assembly 4 can be provided on the upper part of the machine 8. The processing actuator 2 is installed at the bottom of the cup body 3. The rotation motor in the machine 8 is coupled with the rotating shaft of the processing actuator 2 below the processing cup assembly 4. Then the processing actuator 2 is driven to rotate in the cup body 3 to process the food. In an embodiment, the rotation motor of the machine 8 can also be coupled with the rotating shaft of the processing actuator 2 at the upper part of the cup body 3. Then the processing actuator 2 extends from the upper part of the cup body 3 into the cup body 3 to drive the processing actuator 2 to rotate to process the food. The processing actuator 2 can be a stirring knife. The food processor 9 can be a high-speed blender or a soymilk machine. The ingredients in the cup body 3 are fully whipped by a stirring blade to obtain delicate ingredients. The processing actuator 2 can further be a stirring rod. The stirring rod is used to whip and mix the ingredients and liquid in the cup body 3. Thus, fluid ingredients are obtained, or functions such as kneading noodles are performed. The processing actuator 2 can further be a grinder. The grinder can grind and crush the ingredients in the cup body 3 to obtain slurry. Furthermore, when the food processor 9 has a heating function, the heating element can be installed at the bottom of the cup body 3, and can also be installed on the side of the cup body 3. The heating element can be, but is not limited to, a heating tube, a heating wire, a heating film or an electromagnetic coil.

In the food processor 9 of the present application, the slurry valve device 1 can be provided on the processing cup assembly 4. After the fluid food is prepared, the slurry valve device 1 can be used to conveniently discharge the fluid food from the cup body 3, to the slurry receiving cup matched with the food processor 9 or the receiving container placed under the slurry valve device 1 by the user. That is, the food processor 9 of the present application can achieve the advantages of a high degree of automation and more convenient use when making drinks through the above structural design.

Normally, after the food processor 9 has been used for a long time, it is easy for more and more fluid ingredients to be retained in the slurry valve device 1 due to incomplete cleaning. As time goes by, the fluid ingredients retained in the slurry valve device 1 are prone to spoilage and mold. This leads to food safety risks in the subsequent food preparation process due to the spoiled and moldy dirt. Of course, during this process, the user will also try to clean the slurry valve device 1. However, the existing slurry valve device 1 has defects in its structural design, which also makes it impossible to clean it thoroughly. For this reason, the present application further provides a new slurry valve device 1. Through the slurry valve device 1, the food processor 9 also has the advantages of being easy to clean and not easy to hide dirt after long-term use.

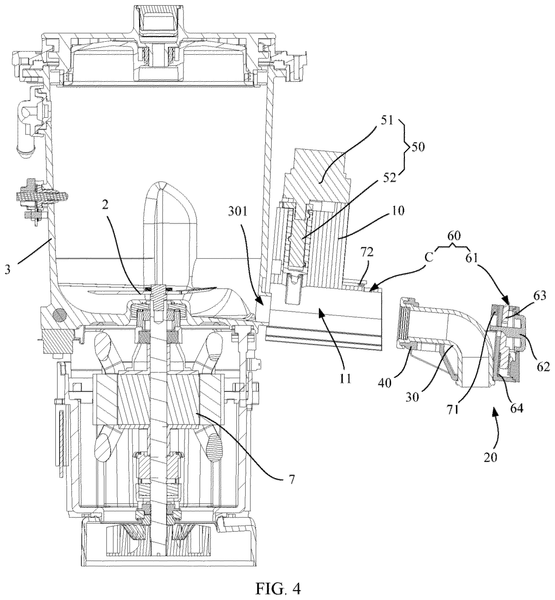

As shown in FIGS. 1 to 4. The food processor 9 is provided with a discharge port 301 on the cup body 3. The slurry valve device 1 is installed on the cup body 3. In an embodiment, the slurry valve device 1 includes a valve seat 10, a discharge pipe assembly 20 and an extrusion mechanism 50. The valve seat 10 is used to install the slurry valve device 1 to the cup body 3. The discharge pipe assembly 20 includes a discharge pipe 30 used to dock with the discharge port 301. In an embodiment, the discharge pipe assembly 20 is movably connected to the valve seat 10 and can be pulled out from the valve seat 10. The extrusion mechanism 50 is provided on the valve seat 10. The extrusion mechanism 50 acts on the outside of the discharge pipe 30 to switch the discharge pipe 30 between a conducted state or a closed state.

In an embodiment, the technical solution of the present application provides the discharge pipe assembly 20 in the slurry valve device 1 to be movably connected to the valve seat 10, and the discharge pipe assembly 20 can be pulled out from the valve seat 10. During the long-term use of the food processor 9, when fluid food adheres to the flow channel of the slurry valve device 1, the discharge pipe assembly 20 can be removed to be cleaned separately, which makes cleaning convenient, lower the risk of mold and bacteria due to long-term retention of food, and thus the food safety performance is improved. In another embodiment, the extrusion mechanism 50 acts on the outside of the discharge pipe 30 to control the conducting and closing of the discharge pipe 30. Unlike the traditional valve structure, the valve core is extended into the discharge pipe 30 to control the conducting and closing of the pipe. Therefore, the situation where food residues are retained on the valve core is avoided. During the cleaning process, it is only necessary to rinse the discharge pipe 30, which is convenient for cleaning, and further improves the hygiene and safety of the food processor 9 during use.

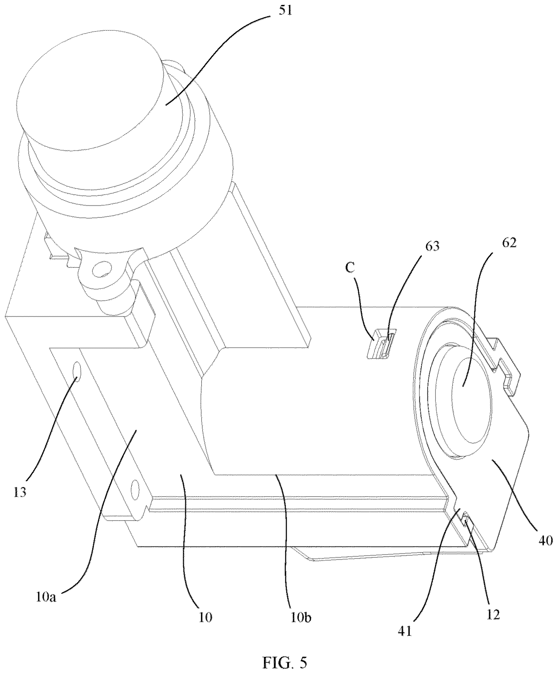

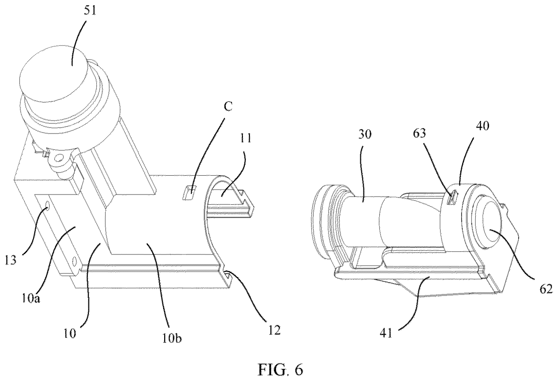

In an embodiment, as shown in FIG. 5 and FIG. 6. The valve seat 10 includes a first seat body 10a and a second seat body 10b. The first seat body 10a and the second seat body 10b may be an integral structure. The first seat body 10a and the second seat body 10b may be formed by plastic injection molding or integral casting of alloy materials. The first seat body 10a is used to install and fix the slurry valve device 1 to the cup body 3. The second seat body 10b is used to install the discharge pipe assembly 20. Specifically, the installation holes 13 may be provided on opposite sides of the first seat body 10a. A connecting column is provided on the outside of the cup body 3. The first seat body 10a has screws or bolts or other connecting members passing through the installation holes 13 to lock the valve seat 10 as a whole to the outside of the cup body 3. It can be understood that, for the connection between the valve seat 10 and the cup body 3, in addition to the screw connection manner exemplified in the above content, it can also be a detachable connection manner such as snap connection, plug-in connection, etc., that can be disassembled with or without destroying the structure, which is not limited by the present application.

The extrusion mechanism 50 of the present application is installed on the first seat body 10a. In an embodiment, the extrusion mechanism 50 can act on the outside of the discharge pipe 30 in a clamping manner so that the discharge pipe 30 is compressed and deformed. Therefore, the internal channel of the discharge pipe 30 is closed. In addition, the discharge pipe 30 can be made of a deformable material such as silicone or rubber. When the extrusion mechanism 50 removes the external force, the discharge pipe 30 can recover again based on its own elastic deformation recovery ability to make its internal channel conductive. Specifically, the extrusion mechanism 50 may include a drive motor 51 installed on the first seat body 10a and an actuator 52 driven by the drive motor 51. The actuator 52 abuts against the outside of the discharge pipe 30 to extrude the discharge pipe 30 under the drive of the drive motor 51, and thus to realize the conducting and closing control operation of the discharge pipe 30. The actuator 52 can be in the form of linear movement or swinging around a fulcrum under the drive of the drive motor 51. In the form of linear movement of the actuator 52, the actuator 52 can be in the form of a rod, and the actuator 52 and the motor shaft of the drive motor 51 are threadedly connected. In the rotation process of the drive motor 51, the actuator 52 is driven by the thread to perform telescopic movement along its axis to squeeze the discharge pipe 30, and the actuator 52 controls the conducting and closing of the discharge pipe 30 in a clamping manner, one end of the actuator 52 can be rotatably connected to the first seat body 10a, and another end of the actuator 52 is also rotatably connected to the connecting rod on the motor shaft of the drive motor 51. And the connecting rod and the motor shaft of the drive motor 51 are threadedly connected, then the drive motor 51 converts the rotation into the linear movement of the connecting rod and drives the actuator 52 to rotate around the rotation connection between it and the first seat body 10a, and thus to clamp the discharge pipe 30 and control the conducting and closing of the discharge pipe 30. It can be understood that in other embodiments, the drive motor 51 can also adopt a cylinder or electromagnetic drive structure.

In an embodiment, the discharge pipe assembly 20 includes an installation seat 40, the valve seat 10 is formed with an installation groove 11 on the second seat body 10b. The installation seat 40 is slidably inserted into the installation groove 11. The cross-sectional opening shape of the installation groove 11 is adapted to the outer contour shape of the installation seat 40. That is, in an embodiment, the installation seat 40 is accommodated and limited by forming the installation groove 11. The installation seat 40 is pulled in and out of the valve seat 10 by sliding along the installation groove 11. When disassembling and cleaning, the operation is convenient. In an embodiment, the installation groove 11 has an avoidance port formed at the bottom of the second seat body 10b and an insertion port opened on the side of the second seat body 10b. The installation seat 40 is inserted into the installation groove 11 from one side of the second seat body 10b from the insertion port. The discharge pipe 30 can extend downward from the avoidance port partially. In an embodiment, the installation groove 11 has three-side openings. The insertion ports on the opposite sides of the second seat body 10b are connected to the discharge port 301. The installation seat 40 is a frame structure provided with a plurality of openings, and thus the above actuator 52 can be extended into the installation seat 40 under the drive of the drive motor 51 to perform conducting and closing control of the discharge pipe 30. The installation seat 40 can be directly docked and communicated with the discharge port 301 after being inserted from the insertion port on the outside of the installation groove 11. And since the discharge pipe 30 can extend from the avoidance port, there will be no interference with the discharge pipe 30 during the pulling process of the discharge pipe assembly 20. And the discharge pipe 30 can be designed to be tilted downward, which makes the discharge process more convenient.

In an embodiment, the installation seat 40 and the valve seat 10 are connected in a sliding manner. In addition to the above-mentioned solution that the installation seat 40 slides along the installation groove 11, a matching form in which a guide rod and a sleeve are provided between the installation seat 40 and the valve seat 10. That is, a sleeve is provided on the installation seat 40. The valve seat 10 is provided with a guide rod extending toward the discharge port 301. The sleeve slides along the guide rod so that the discharge pipe assembly 20 can move toward the cup body 3 and the discharge pipe 30 can dock with the discharge port 301. In an embodiment, a roller and track structure can be provided between the installation seat 40 and the valve seat 10. The track can be provided on the valve seat 10. A roller is provided on the installation seat 40. The track extends toward the discharge port 301. The sliding of the roller along the track can also realize the docking process of the above-mentioned discharge pipe 30 and the discharge port 301.

Considering the stability of the connection structure and the manufacturing cost, the present application provides an installation groove 11 on the valve seat 10. The installation seat 40 is inserted into the installation groove 11 and slides along the installation groove 11 to dock the discharge port 301. On this basis, in order to further improve the accuracy of docking between the discharge pipe 30 and the discharge port 301, in an embodiment, a guide structure is formed between the groove wall of the installation groove 11 and the outer wall of the installation seat 40. In actual application, since the installation seat 40 drives the entire discharge pipe assembly 20 to be inserted from the installation groove 11 into the valve seat 10, for the convenience of operation, the notch of the installation groove 11 is generally slightly larger than the size of the outer contour of the entire discharge pipe assembly 20. Therefore, in an embodiment, through the setting of the guide structure, the posture of the installation seat 40 can be further controlled when it slides along the installation groove 11, which ensures that the discharge pipe 30 and the discharge port 301 are accurately docked, and it is not easy to leak during the slurry discharge due to inaccurate docking.

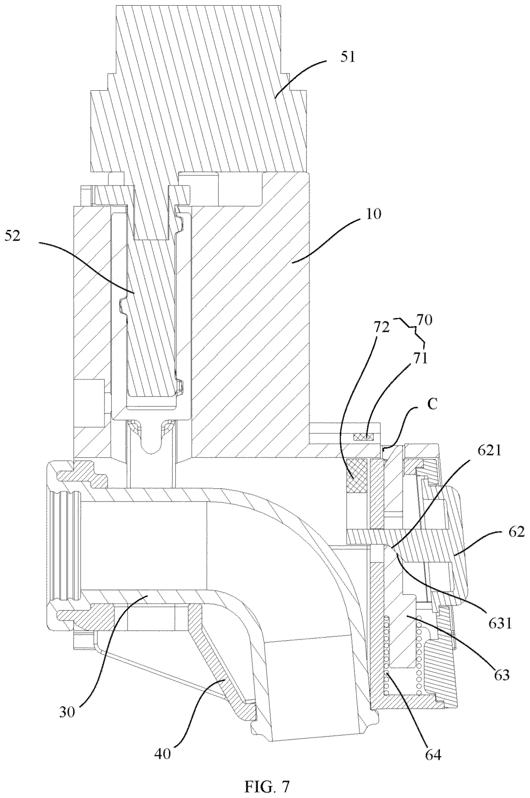

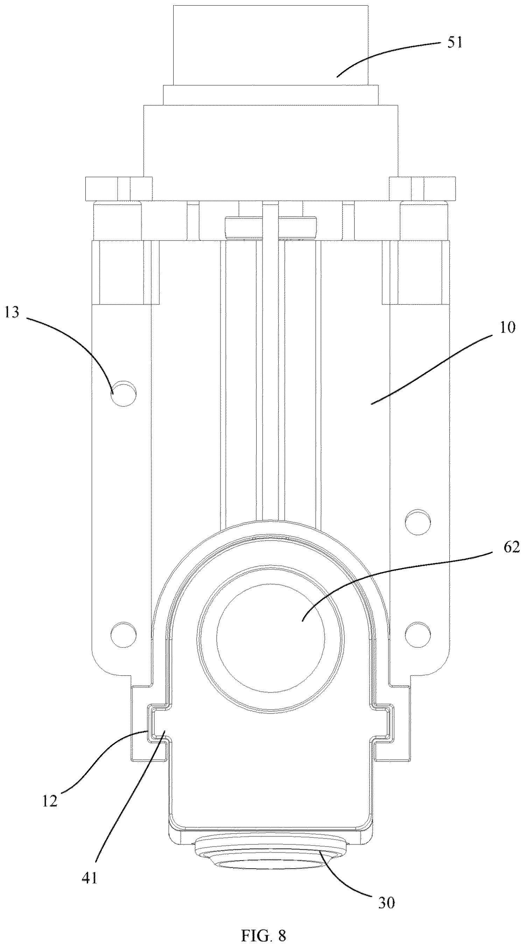

As shown in FIGS. 5 to 8, in an embodiment, the guide structure includes a guide rail 41 and a guide groove 12 formed between the groove wall of the installation groove 11 and the outer wall of the installation seat 40. The guide rail 41 is inserted into the guide groove 12. In this embodiment, the guide groove 12 is formed on the two opposite groove walls of the installation groove 11. The guide rails 41 are protrudingly formed on the two opposite outer side walls of the installation seat 40, and the guide groove 12 extends toward the discharge port 301. The cross-sectional profile of the guide rail 41 and the guide groove 12 can be square, semicircular or dovetail. Therefore, during the sliding process of the installation seat 40 along the installation groove 11, the guide rail 41 and the guide groove 12 further limit the posture of the installation seat 40. It can be avoided that the installation seat 40 results in the deviation when the discharge pipe 30 docks with the discharge port 301 due to the assembly error between the installation groove 11. It can be understood that in other embodiments, the guide structure can also be a matching structure of the roller and the guide groove 12, or the matching structure of the positioning pin and the guide groove 12, which is not limited by the present application.

In order to achieve the more convenient cleaning, in the present application, the discharge pipe assembly 20 is designed to be pulled out from the valve seat 10 entirely. After the entire discharge pipe assembly 20 is pulled out from the valve seat 10 the discharge pipe 30 is further designed to be detachably connected to the installation seat 40. Specifically, in combination with the above content, the installation seat 40 is connected to a hollow structure with multiple opening structures. In this way, the discharge pipe 30 can be designed to be detachably connected to the installation seat 40 by being clamped and fixed. With such a design, after the discharge pipe assembly 20 is pulled out, it can be rinsed as a whole. At the same time, the discharge pipe 30 can be pulled out from the opening of the installation seat 40 separately for separate cleaning. In this way, the cleaning can be more thorough and cleaner.

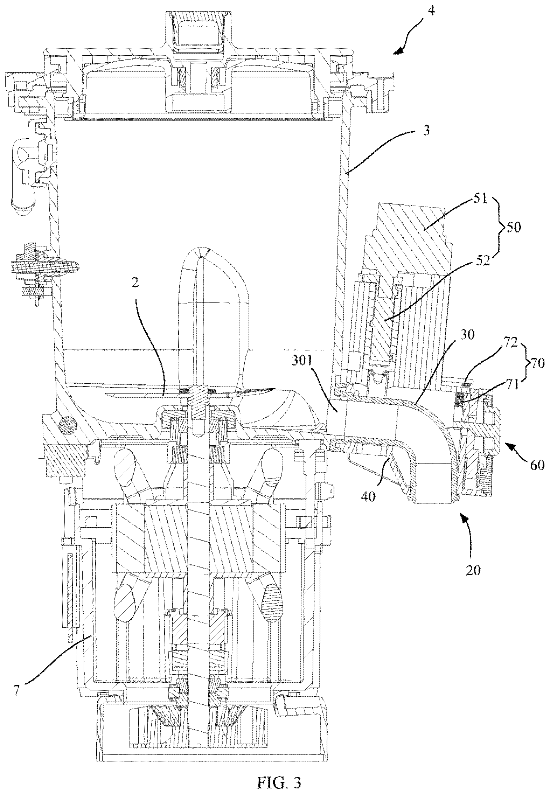

In an embodiment, as shown in FIG. 3, FIG. 4 and FIG. 7, after the discharge pipe assembly 20 is cleaned, the discharge pipe assembly 20 is reinstalled into the valve seat 10. In order to ensure that the discharge pipe assembly 20 is docked with the discharge port 301, the present application further provides a position detection structure 70 between the discharge pipe assembly 20 and the valve seat 10. In some configurations, the position detection structure 70 includes a detection element 71 and a sensing element 72. The detection element 71 is installed on the valve seat 10. The sensing element 72 is installed on the installation seat 40. The structure formed by the detection element 71 and the sensing element 72 can be a Hall switch structure, a photoelectric switch structure, or a micro switch structure. For example, in the Hall switch structure, the detection element 71 is a Hall element provided on the valve seat 10. The sensing element 72 is a magnetic trigger element provided on the installation seat 40 and matched with the Hall element. And the Hall switch structure is provided after the discharge pipe assembly 20 is pushed into the valve seat 10. The discharge pipe 30 can just dock with the position of the discharge port 301. At the same time, after the discharge pipe assembly 20 is pushed into the valve seat 10 so that the discharge pipe assembly 20 and the discharge port 301 are docked, the pulp discharge operation can be performed. However, since the food processor 9 will have a certain vibration during operation, in order to prevent the discharge pipe assembly 20 from sliding out of the valve seat 10 or loosening from the discharge port 301 due to the vibration of the food processor 9, resulting in leakage of fluid food materials, the present application further provides a lock structure 60 between the valve seat 10 and the installation seat 40. In an embodiment, the lock structure 60 includes a lock assembly 61 installed on the installation seat 40 and a buckle groove C provided on the valve seat 10. The lock assembly 61 and the buckle groove C can be separated. During use, when the discharge pipe assembly 20 is pushed into the provided position in the installation groove 11, the position detection structure 70 generates a detection signal. The discharge pipe 30 is docked with the discharge port 301. At the same time, the lock assembly 61 is snapped into the buckle groove C. The discharge pipe 30 and the discharge port 301 are not easily loosened due to the vibration during the operation of the food processor 9. At the same time, the user can separate the lock assembly 61 from the buckle groove C by operating it, that is, the discharge pipe assembly 20 can be pulled out from the valve seat 10, which is convenient to use.

In an embodiment, the lock assembly 61 includes a button 62, a latch 63 and a reset piece 64. The installation seat 40 is provided with an open installation cavity. The latch 63 is movably provided in the installation cavity. The latch 63 partially extends from the installation seat 40 to be plugged into the buckle groove C. The portion of the latch 63 located in the installation cavity is provided with a drive ramp 621. The button 62 partially extends into the installation cavity and is movably connected to the installation seat 40. The part of the button 62 extending into the installation cavity is formed with a guide ramp 631 that is in sliding contact with the drive ramp 621. The reset piece 64 provides elastic force to drive the latch 63 partially to extend out of the installation seat 40. In an embodiment, the reset piece 64 is a spring. One end of the spring abuts against the inner wall surface of the installation cavity. Another end abuts against the latch 63. The spring drives the latch 63 partially to extend out of the installation seat 40 in a natural state. In the process of pushing the discharge pipe assembly 20 into the installation groove 11. The latch 63 is squeezed by the groove wall of the installation groove 11 and will first retract into the installation cavity. When the latch 63 reaches the position of the buckle groove C, it moves to the outside of the installation seat 40 and then opens into the buckle groove C due to the elastic drive of the spring. In this way, the discharge pipe assembly 20 is firmly fixed on the valve seat 10. When the discharge pipe assembly 20 needs to be removed, the user presses the button 62, so that the guide ramp 631 on the button 62 squeezes the driving ramp 621 on the latch 63. Then the latch 63 is driven again to retract into the installation seat 40. Then, under the external pulling force of the user, the discharge pipe assembly 20 can be removed from the valve seat 10. In an embodiment, since the reset piece 64 provides elastic restoring force, the connection is firm and the assembly is easy to use.

It can be understood that, in addition to the above structure forms of the lock structure 60, other structure forms can further be adopted, for example, a magnetic connection can be provided between the valve seat 10 and the installation seat 40, or a structure in which the latch 63 is directly fixed to the socket, etc., which is not limited in the present application.

The above are only some embodiments of the present application, and are not therefore limiting the scope of the present application. Any equivalent structure or equivalent process transformation made by using the contents of the specification and drawings of the present application, or directly or indirectly used in other related technical fields, is also included in the scope of the present application.

## Claims

1. A slurry valve device, applied to a food processor provided with a discharge port, **characterized by**:
a valve seat configured to install the slurry valve device to the food processor;
a discharge pipe assembly; and
an extrusion mechanism provided on the valve seat,
wherein:
the discharge pipe assembly comprises a discharge pipe for docking with the discharge port;
the discharge pipe assembly is movably connected to the valve seat and operable to be withdrawn from the valve seat; and
the extrusion mechanism acts on the outside of the discharge pipe to make the discharge pipe switch between a conducted state and a closed state.

2. The slurry valve device according to claim 1, wherein:
the discharge pipe assembly comprises an installation seat;
the discharge pipe is installed on the installation seat;
the valve seat is formed with an installation groove; and
the installation seat is slidably inserted into the installation groove.

3. The slurry valve device according to claim 2, wherein a guide structure is formed between a groove wall of the installation groove and an outer wall of the installation seat.

4. The slurry valve device according to claim 3, wherein:
the guide structure comprises a guide rail and a guide groove formed between a groove wall of the installation groove and an outer wall of the installation seat; and
the guide rail is inserted into the guide groove.

5. The slurry valve device according to claim 2, wherein the discharge pipe is detachably connected to the installation seat.

6. The slurry valve device according to claim 2, wherein:
the installation groove is provided with an avoidance port formed on a bottom of the valve seat and an insertion port opened on a side part of the valve seat;
the installation seat is inserted into the installation groove from the insertion port through a side of the valve seat; and
a part of the discharge pipe is extended downward from the avoidance port.

7. The slurry valve device according to claim 1, wherein a position detection structure is further provided between the discharge pipe assembly and the valve seat.

8. The slurry valve device according to any one of claims 2 to 7, wherein a lock structure is further provided between the valve seat and the installation seat.

9. The slurry valve device according to claim 8, wherein:
the lock structure comprises a lock assembly installed on the installation seat and a buckle groove provided on the valve seat; and
the lock assembly is separated from the buckle groove.

10. The slurry valve device according to claim 9, wherein:
the lock assembly comprises a button, a latch, and a reset piece;
the installation seat is provided with an open installation cavity;
the latch is movably provided in the installation cavity;
the latch is partially extending from the installation seat to be plugged into the buckle groove;
a part of the latch located in the installation cavity is provided with a drive ramp;
the button is partially extending into the installation cavity and is movably connected to the installation seat;
a part of the button extending into the installation cavity is formed with a guide ramp that is in sliding contact with the drive ramp; and
the reset piece is configured to provide elastic force to drive the latch partially to extend out of the installation seat.

11. A processing cup assembly, comprising:
a cup body;
a processing actuator; and
the slurry valve device according to any one of claims 1 to 10,
wherein:
the cup body is opened with the discharge port;
the processing actuator is extending into the cup body; and
the slurry valve device is installed in the cup body and docking with the discharge port through the discharge pipe.

12. The processing cup assembly according to claim 11, wherein:
an installation hole is opened on the valve seat;
the cup body is provided with a connecting rod outside; and
the valve seat is fixed to the cup body through a cooperation of a connecting piece, the installation hole and the connecting rod.

13. A food processor, comprising:
a machine; and
a processing cup assembly installed on the machine, wherein:
the processing cup assembly is the processing cup assembly according to claim 11 or 12;
a drive piece is provided on the machine; and
the drive piece is in transmission connection with the processing actuator.
